# EUROPÄISCHE PATENTANMELDUNG

(11) **EP 2 050 579 A1**
(43) Veröffentlichungstag der Anmeldung: **22.04.2009**
(21) Anmeldenummer: 08105321.7
(22) Anmeldetag: 12.09.2008
(51) Int. Cl.: B42C 9/00, G01B 11/02, G01B 11/06

(54) **Vorrichtung zur Kontrolle und Regelung einer aufzubringenden Klebstoffschicht bei der Herstellung von Druckerzeugnissen**

(30) Priorität: 15.10.2007 DE 102007049381
(71) Anmelder: Heidelberger Druckmaschinen Aktiengesellschaft, 69115 Heidelberg (DE)
(72) Erfinder: Adler, Michael, 04129 Leipzig (DE); Rösen, Heinz Dieter, 46487 Wesel (DE); Schäfer, Thomas, 04277 Leipzig (DE); Sommerer, Frank, 04288 Leipzig (DE)

(57) **Zusammenfassung**

Die Klebstoffschicht auf einem Buchblock zum Verkleben der einzelnen Bogen ist von entscheidender Bedeutung für die Qualität der Buchbindung.
Die Erfindung betrifft eine Vorrichtung (1) zur Kontrolle einer Klebstoffschichtdicke auf einem Produkt (100), insbesondere einem Buchblock oder einem Buchdeckel,
wobei die Vorrichtung eine Einrichtung zum Einlesen eines 3D-Lichtschnittprofils der Klebstoffschicht mittels Laser-Triangulation mit einer Hochgeschwindigkeitskamera (10) und einem Laser-Projektor (11), und eine Auswerteeinrichtung (13) zum Auswerten des 3D-Lichtschnittprofils mit einem Auswerteprogramm umfasst. Entspricht das Profil nicht den Vorgaben, so wird das Produkt markiert oder ausgeschleust.

## Beschreibung

Die Erfindung betrifft eine Vorrichtung zur Kontrolle und Regelung einer aufzubringenden Klebstoffschichtdicke bei der Herstellung von Druckerzeugnissen gemäß dem Oberbegriff von Anspruch 1 und ein Verfahren zur Kontrolle und Regelung einer aufzubringenden Klebstoffschicht gemäß den Ansprüchen 9 und 11.

Bei der Herstellung von Druckerzeugnissen, insbesondere Büchern, unterscheidet man im Wesentlichen zwei Arten von Buchkonstruktionen, den Festeinband (Hardcover) und die Mehrlagenbroschur (Paperback).

Für den Festeinband werden zunächst Falzbogen und / oder Einzelblätter zu einem sogenannten Buchblock zusammengetragen. Der Rücken wird mit einer oder mehreren Klebstoffschichten bedeckt und anschließend mit einem Fälzelstreifen, der bis in die rückennahen Teile des Vor- und Nachsatzes reicht, versehen. Die aus mehreren Teilen bestehende Buchdecke wird anschließend um den Buchblock gelegt und fest und vollflächig an Vor- und Nachsatz mit dem Buchblock verbunden. Der Rücken bleibt frei. Je nach buchbinderischer Art wird dabei keine Rückenbearbeitung vorgenommen, z. B. wenn es sich um fadengeheftete Blocks, Fadensiegelung oder Perfobindung handelt.

Für die Mehrlagenbroschuren werden ebenfalls zunächst Falzbogen und / oder Einzelblätter zu einem Buchblock zusammengetragen. Der Buchblock wird anschließend am Rücken durch Fräsen bearbeitet, beleimt und dann mit einem Umschlag versehen. Dabei wird der Umschlag fest mit dem Blockrücken verklebt.

In der Buchbindeindustrie sind Klebebinder gebräuchlich, die all diese Arbeitsgänge ausführen können. Die möglichen Bindeverfahren und Produktvarianten sind dabei von der Maschinenausrüstung abhängig. Ein gebräuchlicher Klebebinder besteht im Wesentlichen aus den Funktionseinheiten: Buchblocktransportsystem, Rückenbearbeitung, Rückenbekleben, Zwischentrocknung, Seitenbekleben, Rückenverstärkung, Umschlag anlegen, Umschlag anpressen und trocknen. Eine derartige Buchbindemaschine ist aus der DE 20 2005 007 012 U1 bekannt.

Klebstoffauftragssysteme zum Auftragen von Klebstoff auf Bücher sind bekannt. Ein typisches Klebstoffauftragssytem umfasst wenigstens eine um eine Achse drehbare Walze, wobei wenigstens ein Teil ihres Umfangs in einem einen Leimvorrat enthaltenden Behälter angeordnet ist. Beim Abrollen der Walze nimmt diese an ihrer Außenfläche Leim auf. Die von einer Bindevorrichtung kommenden Bücher werden derart bewegt, dass sie mit dem auf der Außenfläche der rotierenden Walze befindlichen Leim in Berührung kommen. Wenn die Bücher mit dem Leim in Berührung kommen, wird der auf der Außenfläche der rotierenden Walze befindliche Leim von dieser auf die sich bewegenden Bücher übertragen. Ein solches System ist zum Beispiel aus US 2,605,739 bekannt.

Besonders kritisch beim Auftragen von Klebstoff ist es, die richtige Menge des Klebstoffs auf einen Buchrücken aufzubringen, um eine befriedigende Bindequalität zu erreichen. Dabei ist nicht nur die Klebstoffdicke ausschlaggebend, sondern auch die Länge und Gleichmäßigkeit der Klebstoffspur auf dem Buchrücken, insbesondere wo der Klebstoff auf dem Buchrücken ansetzt und wo der Klebstoff wieder auf dem Buchrücken absetzt.

Die Kontrolle des Klebstoffauftrages geschieht üblicherweise dadurch, dass einzelne Buchblöcke aufgeschnitten und durch das menschliche Auge kontrolliert werden. Dieses Vorgehen ist vergleichsweise aufwendig und kleinere Schichtdickenunterschiede oder Fehler können nicht festgestellt werden. Damit ist auch eine Korrektur des Klebstoffauftrags nicht möglich. Fehlstellen im Klebstoffauftrag entstehen beispielsweise durch Papierschnitzel zwischen Rakel und Walzen, durch Defekte am Nachfüllsystem oder durch sonstige technische Fehler. Das Feststellen eines Fehlers kann die kostspielige Überprüfung einer gesamten Serie von Büchern oder Broschuren nach sich ziehen, ggf. sogar die Rücknahme der Serie. Um den Klebstoffauftrag besser kontrollieren zu können wurden deshalb verschiedenartige Verfahren und Vorrichtungen entwickelt.

Die DE 101 08 588 A1 beschreibt ein Verfahren und eine Vorrichtung zur Kontrolle des Klebstoffauftrags in Buchbindemaschinen. Erfindungsgemäß werden dabei im Anschluss an den Klebstoffauftrag die mit Klebstoff zu versehenden Bereiche mit ultraviolettem Licht bestrahlt. Die bestrahlten Bereiche werden dabei mit einer Kamera vermessen. Die durch die Kamera detektierten Klebstoffbereiche werden mit einem Referenzbild verglichen und der Grad des Klebstoffauftrages wird mittels einer Auswerteeinheit bestimmt. Nachteilig an einem derartigen Verfahren und einer dergestalten Vorrichtung ist, dass der Klebstoff durch den Einsatz von UV-Licht gehärtet wird, was sich nachteilig auf die anschließende Verklebung des Umschlages auswirkt.

Weiterhin ist nachteilig, dass der Klebstoff die fluoreszierende Eigenschaft aufweisen muss oder dass dem Klebstoff kostenintensive Zusatzstoffe beigefügt werden müssen.

Die DE 37 36 725 A1 offenbart ein Verfahren und eine Einrichtung zur kontrollierten Auftragung von Klebepunkten. Erfindungsgemäß wird der Lichtstrahl einer Lichtquelle auf eine Oberfläche gelenkt und die Intensität des reflektierten Lichtstrahls vor und nach dem Setzen eines Klebstoffpunktes miteinander verglichen. Aus der Abweichung der Intensitäten wird gefolgert, ob ein Klebstoffpunkt gesetzt wurde. Nachteilig dabei ist, dass nur die Anwesenheit jedoch nicht die Dicke oder die Form der Fehlstelle eines Klebstoffpunktes ermittelt werden kann.

Die DE 31 12 128 A1 beschreibt ein Verfahren zur Bestimmung der Dicke von Klebstoffschichten auf Buchblockrücken. Dabei wird ein Mittelwert der Klebstoffschichtdicke in einer Verstärker-, Rechen- und Anzeigeeinheit aus Kenngrößen gebildet, die durch Messwerterfassung in zwei fixierten Messstellungen gewonnen werden. Die Messungen erfolgen mindestens auf einer Bezugsfläche vor dem Auftrag der Klebstoffschicht, auf der Oberfläche der Klebstoffschicht und ggf. auf Bezugsflächen nach dem Auftrag der Klebstoffschicht. Für die Messwerterfassung wird ein gebündelter Lichtstrahl verwendet, der unter einem definierten Einfallswinkel auf die jeweilige Messstelle auftrifft und auf eine photoelektrische Empfängeranordnung zurückgeworfen wird. Nachteilig an diesem Verfahren ist, dass die Klebstoffdicke über die Mittelung zweier punktueller Messungen geschieht, was keine Aussage über die flächige Verteilung des Klebstoffs zulässt.

Die EP 0 847 874 B1 beschreibt ein Verfahren zum Überwachen des Klebstoffauftrags auf einen Rücken eines in einer Buchbindemaschine bearbeiteten und durch Kleben gebundenen Buchblocks und zeigt eine Vorrichtung zur Durchführung des Verfahrens. Die Vorrichtung besitzt einen Sender und einen zugeordneten Empfänger, welche als Messwertgeber zusammenwirken. Diese bilden einen quer zum Förderpfad eines Buchblocks durch die Buchbindemaschine angeordneten Messbereich, so dass die an dem Buchblockrücken aufgetragene Klebstoffschicht den Messbereich zumindest teilweise durchsetzt. Nachteilig an Verfahren und Vorrichtung ist, dass diese nur bedingt eine Ermittlung der flächigen Klebstoffschichtdicke ermöglichen und eine Fehlstellenanalyse nicht ermöglichen.

Aus der DE 195 32 767 A1 ist es bekannt, ein Oberflächenprofil eines Objektes mittels Triangulationsverfahren zu bestimmen. Eine Fehlstellenbestimmung und -analyse ist mit diesem Verfahren nicht möglich.

Aus der DE 44 23 288 B4 ist eine Anordnung zum Messen der Dicke einer transparenten Beschichtung auf einem Druckerzeugnis bekannt. Auch mit diesem Verfahren ist eine Fehlstellenbestimmung und -analyse nicht möglich.

Aufgabe der vorliegenden Erfindung ist es deshalb, ein Verfahren zu beschreiben und eine Vorrichtung zu schaffen, mit der die aufzutragende Klebstoffschicht auf einem Produkt mit hoher Genauigkeit kontrolliert und geregelt werden kann.

In einer vorteilhaften Ausgestaltung der erfindungsgemäßen Vorrichtung ist die Regelung zur Steuerung der Klebstoffaufbringvorrichtung mit einer Auswerteeinheit verbunden. In der Auswerteeinheit wird das durch Triangulation eingelesene 3D-Lichtschnittprofil einer aufgebrachten Klebstoffschicht mit einem in einem Speicher abgespeicherten Soll-3D-Lichtschnittprofil einer Referenz-Klebstoffschicht verglichen. In Abhängigkeit des Auswerteergebnisses wird dann die aufzubringende Klebstoffmenge für weitere Produkte entsprechend nachgeregelt. Vorzugsweise wird über die gesamte Fläche der aufgebrachten Klebstoffschicht deren Schichtdicke eingelesen. Eine solche Vorrichtung hat den Vorteil, dass Fehlstellen im Mikrometerbereich erkannt werden können. Weiterhin kann aufgrund der exakten Schichtdickenmessung über die gesamte Klebstoffauftragungsfläche eine Rückkopplung an die Klebstoffaufbringvorrichtung erfolgen. Bei der Messung besteht keinerlei Einschränkung bezüglich der Klebstoffeigenschaften. Farbe, Reflexions- und Fluoreszenzverhalten des Klebstoffs sind unerheblich, weil kontrastunabhängig gemessen wird.

In einer besonders vorteilhaften Ausgestaltung handelt es sich bei der Vorrichtung um eine Hochgeschwindigkeitskamera, wie CCD-Zeilenkamera oder eine Kamera mit CMOS-Sensor und um eine Lichtquelle, wie beispielsweise einen Laser-Linienprojektor.

In einer weiteren vorteilhaften Ausgestaltung sind die Kamera und die Lichtquelle jeweils in einem definierten von Null verschiedenen Winkel angeordnet.

In einer weiteren bevorzugten Ausgestaltung sind die Soll-3D-Lichtschnittprofile mit zugehörigen Toleranzwerten in einem Speicher abgelegt.

Die erfindungsgemäße Vorrichtung wird bevorzugt in einem Klebebinder eingesetzt und ermöglicht somit die Durchführung eines Verfahrens zur Kontrolle und Regelung einer aufzubringenden Klebstoffschicht mit folgenden Verfahrensschritten:
a) Klebstoffauftrag auf ein Produkt mittels einer Klebstoffauftragseinrichtung
b) Transport des Produktes zu einer Vorrichtung zur Kontrolle der Klebstoffschicht, insbesondere einer Vorrichtung nach Anspruch 1
c) Aussenden eines Lichtstrahls durch eine Beleuchtungseinheit
d) Betrachtung des Strahls auf der Klebstoffschicht durch eine Hochgeschwindigkeitskamera und Winkelvermessung mit trigonometrischer Berechnung
e) inkrementeller Weitertransport des Produktes
f) Wiederholen der Schritte c), d) und e) bis die gesamte Fläche der Klebstoffschicht vermessen ist
g) Zusammensetzung der Messergebnisse der Einzelmessungen zu einem 3D-Lichtschnittprofil mit nachfolgender Auswertung mit einer Auswerteeinrichtung
h) Anzeige des Auswertungsergebnisses auf einer optischen Anzeigeeinheit.
i) Aussenden von Steuersignalen zur Korrektur der Einstellungen der Klebstoffauftragseinheit, wenn das 3D-Lichtschnittprofil nicht den in der Auswerteeinheit hinterlegten Vorgaben entspricht.
j) Ausschleusen oder Markieren des Produktes, wenn das 3D-Lichtschnittprofil nicht den in der Auswerteeinheit hinterlegten Vorgaben entspricht.

Hinsichtlich weiterer vorteilhafter Ausgestaltungen der Erfindung wird auf die Unteransprüche sowie die Beschreibung eines Ausführungsbeispiels unter Bezugnahme auf die beiliegenden Zeichnungen verwiesen.

Die Erfindung soll anhand eines Ausführungsbeispiels noch näher erläutert werden. Es zeigen in schematischer Darstellung:
- Fig. 1: eine Vorrichtung zur Kontrolle einer Klebstoffschichtdicke auf einem Buchblock in einer Seitenansicht
- Fig. 2: den Einsatz der in der Figur1 gezeigten Vorrichtung in einem Klebebinder

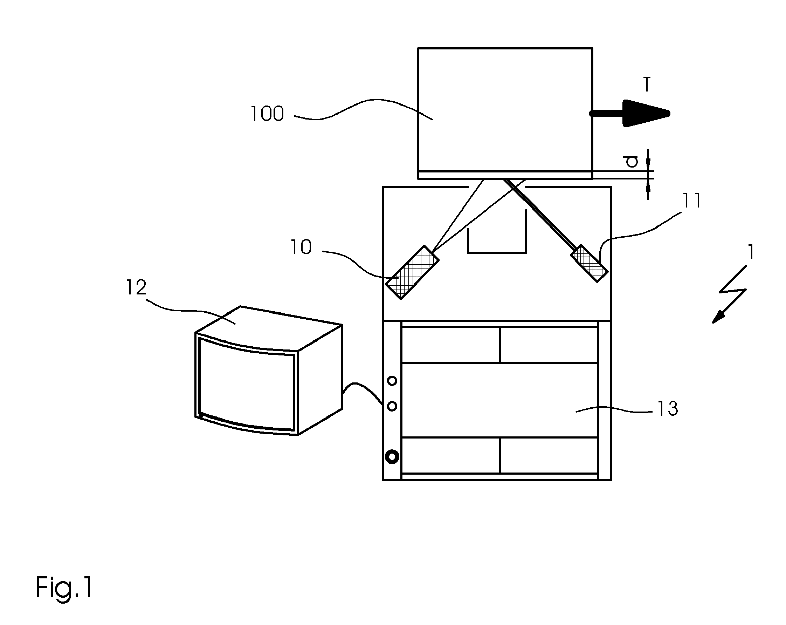

Fig. 1 zeigt eine Vorrichtung 1 zur Kontrolle der Klebstoffschichtdicke d mittels Triangulation und einen mit einer Klebstoffschicht versehenen Buchblock 100. Der Buchblock 100 wird in Transportrichtung T über den Messbereich der Vorrichtung zur Kontrolle der Klebstoffschichtdicke d hinwegbewegt. Die Vorrichtung 1 zur Kontrolle der Klebstoffschichtdicke d besteht aus einer Beleuchtungseinheit 11, einer Kamera mit Objektiv 10, einer Auswerteeinrichtung 13 und einer Anzeigeeinheit 12. Die Beleuchtungseinheit 10, beispielsweise ein Laser projiziert auf die Klebstoffschicht des Buchblocks 10 einen Lichtpunkt, der mit einer CCD- oder CMOS-Kamera 10 beobachtet wird. Ändert sich nun der Abstand zwischen Sensor und Klebstoffschichtoberfläche, ändert sich dadurch auch der Winkel, unter dem die Kamera 10 den Lichtfleck aufnimmt. Die Verbindung Kamera 10 - Lichtquelle 11 sowie die beiden Strahlen von und zum Objekt bilden hierbei ein Dreieck, daher die Bezeichnung Triangulation. Bei Kenntnis der Strahlrichtung und des Abstandes zwischen Kamera 10 und Lichtquelle 11 kann damit der Abstand von Klebstoffschichten zur Kamera bestimmt werden. Durch einfache trigonometrische Berechnung kann damit die Abstandsänderung sehr genau bestimmt werden. Die mögliche Auflösung geht dabei bis hinunter in den Submikrometerbereich. Verwendet man anstelle eines einzelnen Lichtpunkts eine Linie aus unendlich vielen Punkten, so kann das Verfahren auf zwei Dimensionen (2D) ausgedehnt werden. Aus dem Abbild der Laserlinie auf der Oberfläche, das durch die Kamera aufgenommen wird, kann dann ein Höhenprofil entlang der Laserlinie berechnet werden. Der Buchblock 100 wird unter der Vorrichtung 1 in Transportrichtung T weitertransportiert. Die dadurch anstehende Verschiebung der Linie im Kamerabild wird mit den Methoden der Fotogrammmetrie in 3D-Koordinaten umgerechnet. Hierdurch entsteht ein exaktes 3D-Lichtschnittprofil der Klebstoffschicht, welche in der Auswerteeinheit 12 mit einem hinterlegten 3D-Sollprofil verglichen werden kann. Das Ergebnis dieser Auswertung kann auf einer Anzeigeeinheit 12 dargestellt werden.

Entsprechend kann auch die Klebstoffschicht eines Buchumschlages 101 kontrolliert werden.

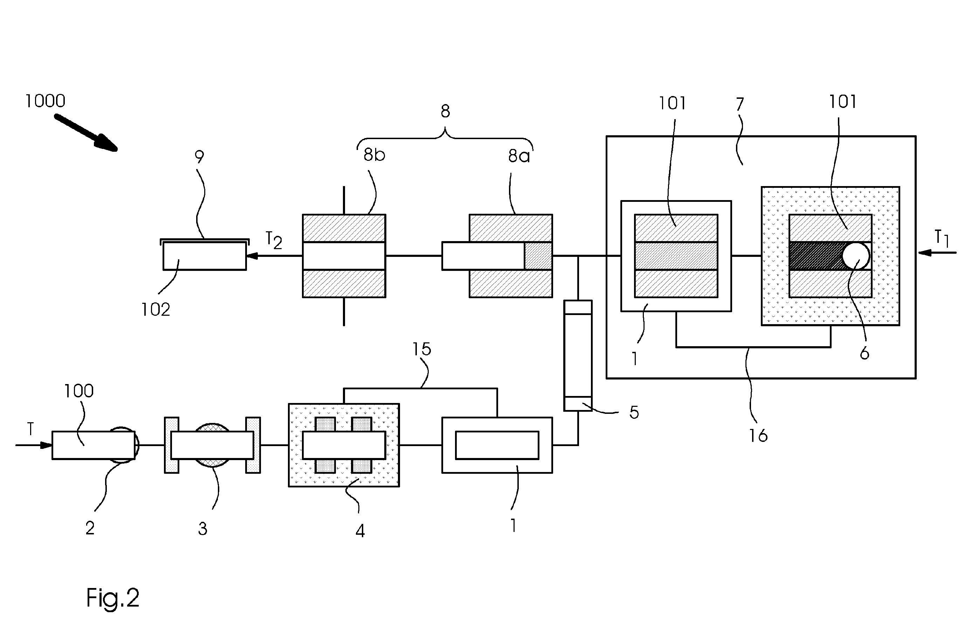

Fig. 2 zeigt einen Klebebinder 1000 in einer schematischen Darstellung. Ein Buchblock 100 wird dem Klebebinder 1000 in Transportrichtung T zugeführt, in einer ersten Rückenbearbeitungsstation 2 und mindestens einer zweiten Rückenbearbeitungsstation 3 bearbeitet. Der Buchblockrücken des Buchblocks 100 wird in einer Klebstoffauftragsstation 4 mit einer Klebstoffschicht versehen und die einzelnen Bogen des Buchblocks miteinander verbunden. In einer erfindungsgemäßen Vorrichtung zur Kontrolle der Klebstoffschichtdicke d kann nachfolgend die Klebstoffschicht kontrolliert werden. Die Vorrichtung zur Kontrolle der Klebstoffschichtdicke d und die Klebstoffauftragsstation 4 sind über eine Datenleitung 15 miteinander verbunden. Dies ermöglicht es, dass die Einstellungen des Klebstoffauftragssystems 4 basierend auf den Messergebnissen der Vorrichtung 1 korrigiert werden. Im Anschluss an die Vorrichtung 1 kann sich eine nicht dargestellte Ausschleusweiche zum Ausschleusen eines fehlerhaft beklebten Buchblocks befinden. Daran schließt sich eine optionale Warmhaltestrecke 5 an. Aus dem Magazin eines nicht näher dargestellten Umschlaganlegers wird ein Umschlag 101 in Transportrichtung T₁ einer Umschlagzuführung 7 zugeführt und dort durch ein Klebstoffauftragssystem 6, bspw. einer Düse, mit Klebstoff versehen. Anschließend wird die Klebstoffschichtdicke auf dem Umschlag 101 mittels einer Vorrichtung 1 kontrolliert. Das Klebstoffauftragssystem 6 und die Vorrichtung 1 sind mittels Datenleitung 16 miteinander verbunden. Dadurch können die Einstellungen des Klebstoffauftragssystems 6 basierend auf den Messergebnissen der Vorrichtung 1 geregelt werden. Anschließend werden sowohl die beleimten Buchblocks 100 als auch die beleimten Umschläge 101 einer Andrückstation 8 zugeführt. Zwischen der Vorrichtung 1 zur Kontrolle der Klebstoffschichtdicke auf einem Umschlag 101 und der Andrückstation 8 kann sich eine nicht dargestellte Umschlagausschleusweiche befinden. Hierüber können fehlerhaft beleimte Umschläge ausgeschleust werden.

In der Andrückstation 8 werden zunächst in einem Arbeitstakt 8a der beklebte Buchblock 100 und der mit Klebstoff versehene Umschlag 101 relativ zueinander positioniert und miteinander verbunden. Anschließend erfolgt in einem weiteren Arbeitstakt 8b die Formung des Rückens in der Andrückstation 8. Die fertigen Bücher 102 werden am Ende des Klebebinders 1000 in Transportrichtung T₂ in einer Auslagestation 9 ausgelegt.

Die erfindungsgemäße Vorrichtung kann nicht nur zur Kontrolle und Regelung einer auf ein Produkt aufzubringenden Klebstoffschicht verwendet werden, sondern darüberhinaus auch zur Kontrolle der Buchblocks und Umschläge auf fehlerhafte Rillungen oder Fräsungen. Als fehlerhaft erkannte Produkte können dann ausgeschleust werden.

### Bezugszeichenliste

- 1: Vorrichtung zur Kontrolle der Klebstoffschichtdicke
- 2: Rückenbearbeitungsstation 1
- 3: Rückenbearbeitungsstation 2
- 4: Klebstoffauftragsstation Buchblockrücken
- 5: Warmhaltestrecke
- 6: Klebstoffauftragssystem Umschlag
- 7: Umschlagzuführung
- 8: Andrückstation
- 8a: Arbeitstakt
- 8b: Arbeitstakt
- 9: Auslagestation

- 10: Kamera mit Objektiv
- 11: Beleuchtungseinheit
- 12: Anzeigeeinheit
- 13: Auswerteeinrichtung
- 15: Datenleitung
- 16: Datenleitung

- 100: Buchblock
- 101: Umschlag
- 102: Buch

- 1000: Klebebinder

- T: Transportrichtung
- T₁: Transportrichtung
- T₂: Transportrichtung

- d: Klebstoffschichtdicke

## Patentansprüche

1. Vorrichtung zur Kontrolle und Regelung einer auf ein Produkt, insbesondere einen Buchblock, einen Buchdeckel oder einen Umschlag aufzubringenden Klebstoffschicht mittels Triangulationsverfahren, mit einer Klebstoffaufbringvorrichtung und einer Regelung zur Steuerung der Klebstoffaufbringvorrichtung,
**dadurch gekennzeichnet,**
**dass** die Regelung mit einer Auswerteeinheit verbunden ist und die Regelung die aufzubringende Klebstoffmenge in Abhängigkeit des Auswerteergebnisses der Auswerteeinheit eines durch Triangulation eingelesenen 3D-Lichtschnittprofils der aufgebrachten Klebstoffschicht mit einem in einem Speicher abgespeicherten Soll-3D-Lichtschnittprofil einer Referenz-Klebstoffschicht regelt.

2. Vorrichtung nach Anspruch 1,
**dadurch gekennzeichnet,**
**dass** über der gesamten Fläche der Klebstoffschicht deren Schichtdicke eingelesen wird.

3. Vorrichtung nach Anspruch 1 oder 2,
**dadurch gekennzeichnet,**
**dass** es sich bei der Vorrichtung um eine Hochgeschwindigkeitskamera wie CCD-Zeilenkamera oder eine Kamera mit CMOS-Sensor und einer Lichtquelle handelt.

4. Vorrichtung nach einem der Ansprüche 1 bis 3,
**dadurch gekennzeichnet,**
**dass** die Lichtquelle als Laser-Linienprojektor ausgeführt ist.

5. Vorrichtung nach einem der Ansprüche 1 bis 4,
**dadurch gekennzeichnet,**
**dass** die Kamera und die Lichtquelle jeweils in einem definierten von Null verschiedenen Winkel zueinander angeordnet sind.

6. Vorrichtung nach einem der Ansprüche 1 bis 5,
**dadurch gekennzeichnet,**
**dass** das Soll-3D-Lichtschnittprofil mit zugehörigen Toleranzwerten hinterlegt ist.

7. Klebebinder mit einer Vorrichtung nach einem der Ansprüche 1 bis 6..

8. Klebebinder nach Anspruch 7,
**dadurch gekennzeichnet,**
**dass** der Klebebinder eine Ausschleusweiche zum Ausschleusen eines Produktes mit einer fehlerhaften Klebstoffschicht hat.

9. Verfahren zur Kontrolle einer auf ein Produkt aufgebrachten Klebstoffschicht, wie einem Buchblock, einem Buchdeckel oder einem Umschlag über der gesamten Fläche der Klebstoffschicht, insbesondere in Buchbindemaschinen, mittels Triangulation, **gekennzeichnet durch** nachfolgende Schritte:
a) Klebstoffauftrag auf ein Produkt mittels einer Klebstoffauftragseinrichtung
b) Transport des Produktes zu einer Vorrichtung zur Kontrolle der Klebstoffschicht, insbesondere einer Vorrichtung nach Anspruch 1
c) Aussenden eines Lichtstrahls **durch** eine Beleuchtungseinheit
d) Betrachtung des Strahls auf der Klebstoffschicht **durch** eine Hochgeschwindigkeitskamera und Winkelvermessung mit trigonometrischer Berechnung
e) inkrementeller Weitertransport des Produktes
f) Wiederholen der Schritte c), d) und e) bis die gesamte Fläche der Klebstoffschicht vermessen ist
g) Zusammensetzung der Messergebnisse der Einzelmessungen zu einem 3D-Lichtschnittprofil mit nachfolgender Auswertung mit einer Auswerteeinrichtung

10. Verfahren nach Anspruch 10 mit einem zusätzlichen Schritt
h) Anzeige des Auswertungsergebnisses auf einer optischen Anzeigeeinheit.

11. Verfahren nach Anspruch 10 oder 11 mit einem zusätzlichen Schritt zur Steuerung einer auf Produkte aufzubringenden Klebstoffschicht
i) Aussenden von Steuersignalen zur Korrektur der Einstellungen der Klebstoffauftragseinheit, wenn das 3D-Lichtschnittprofil nicht den in der Auswerteeinheit hinterlegten Vorgaben entspricht.

12. Verfahren zur Kontrolle eines Buchblocks, eines Buchdeckels oder eines Umschlags über seine gesamten Oberfläche, insbesondere in Buchbindemaschinen, mittels Triangulation,
**gekennzeichnet durch** nachfolgende Schritte:
k) Transport des Produktes zu einer Vorrichtung zur Kontrolle der Oberfläche
l) Aussenden eines Lichtstrahls **durch** eine Beleuchtungseinheit
m) Betrachtung des Strahls auf der Oberfläche **durch** eine Hochgeschwindigkeitskamera und Winkelvermessung mit trigonometrischer Berechnung
n) inkrementeller Weitertransport des Produktes
o) Wiederholen der Schritte l), m) und n) bis die gesamte Oberfläche des Produktes vermessen ist
p) Drehung des Produktes zur Kontrolle der gegenüberliegenden Oberfläche und wiederholen der Schritte l) bis o)
q) Zusammensetzung der Messergebnisse der Einzelmessungen zu einem 3D-Lichtschnittprofil mit nachfolgender Auswertung mit einer Auswerteeinrichtung

13. Verfahren nach Anspruch 9, 10, 11 oder 12 mit einem zusätzlichen Schritt
j) Ausschleusen oder Markieren des Produktes, wenn das 3D-Lichtschnittprofil nicht den in der Auswerteeinheit hinterlegten Vorgaben entspricht.
